# EUROPEAN PATENT APPLICATION

(11) **EP 2 192 730 A1**
(43) Date of publication of application: **02.06.2010**
(21) Application number: 08832650.9
(22) Date of filing: 18.09.2008
(51) Int. Cl.: H04L 12/56

(54) **QoS RESOURCE RESERVATION METHOD AND MOBILE TERMINAL USED IN THE METHOD**

(30) Priority: 21.09.2007 JP 2007246025
(71) Applicant: Panasonic Corporation, Kadoma-shi Osaka 571-8501 (JP)
(72) Inventor: ARAMAKI, Takashi c/o Panasonic Corporation, Osaka 540-6207 (JP); HORI, Takako c/o Panasonic Corporation, Osaka 540-6207 (JP); CHENG, Hong c/o Panasonic Singapore Laboratories Pte. Ltd.,, Singapore 534415 (SG); MARWAHA, Shivanajay c/o Panasonic Singapore Laboratories Pte. Ltd.,, Singapore 534415 (SG); TAN, Pek Yew c/o Panasonic Singapore Laboratories Pte. Ltd.,, Singapore 534415 (SG)
(74) Representative: Grünecker, Kinkeldey, Stockmair & Schwanhäusser Anwaltssozietät
(86) International application number: PCT/JP2008/002579
(87) International publication number: WO 2009/037843

(57) **Abstract**

Disclosed is a technique to provide a QoS resource reservation method and the like, which will not generate a delay in establishing a QoS reservation and can avoid the waste of QoS resources. According to the technique, the method includes: a step of causing a mobile node 110 to send, toward a corresponding node 100, a first message to collect information for making a QoS resource reservation; and a step in which, when the mobile node detects a handover thereof during QoS resource reservation processing, the mobile node sends a second message to a path from the mobile node before the handover to the corresponding node to remove the QoS resource reservation.

## Description

### TECHNICAL FIELD

The present invention relates to a QoS resource reservation method for making a QoS resource reservation on a communication path between a mobile node and a corresponding node as a communication partner, and the mobile node used in the method.

### BACKGROUND ART

In a packet-switched communication network, a mobile node (MN) can communicate with a corresponding node (CN) as a communication partner. As described in Non-Patent Document 1 cited bellow, in order to make the reservation of a QoS resource for communication, the MN sends a QUERY message (which may be simply called QUERY below), and if a path from the MN to the CN has available and sufficient QoS resources, the CN sends a RESERVE message (which may be simply called RESERVE bellow), and the MN receives the RESERVE message.
Non-Patent Document 1: J. Manner (ed.), "NSLP for Quality-of-Service Signaling," Internet Draft draft-ietf-nsis-qos-nslp-11, June 2006.
Non-Patent Document 2: G. Ash (ed.) "QoS NSLP QSPEC Template," Internet Draft draft-ietf-nsis-qspec-14, January 2007.
Non-Patent Document 3: T. Sanda (ed.), "Path type support for NSIS signaling," Internet Draft draft-sanda-nsis-path-type-03.txt, October 24, 2005.
Patent Document 1: PCT International Application Publication No. WO2006/041183
Patent Document 2: PCT International Application Publication No. W02007/061118

When a multi-home MN performs a handover during the progress of QUERY processing, the MN performs the QUERY processing again after the handover, generating a delay in establishing a QoS reservation. As one of methods to solve this problem, the QUERY result (including information on the optimum path and information on the second optimum path) is BICAST to the MN (i.e., it is sent to two different paths, the optimum path and the second optimum path). Thus, if an interface for the optimum path performs a handover, the MN can receive the result of the QUERY processing through another interface for the second optimum path. At this time, no reservation is made for the path (the second optimum path). However, this method still has the problem of generating a delay in establishing a QoS path because of the need to send another RESERVE to the second optimum path.

As one of other solutions, a Passive reservation is made on the second optimum path simultaneously with transmission of the QUERY result to the MN through the second optimum path in order to expedite the reservation processing on the second optimum path. Since the Passive reservation state is installed on the second optimum path, the reservation processing will be expedited if required later. However, when the interface connected to the optimum path performs a handover, it results in the waste of QoS resources on the selected/optimum path. This is because the QoS reservation state on the selected path is only removed after a soft-state timer of a QNE expires.

### DISCLOSURE OF THE INVENTION

In view of the above problems, it is an object of the present invention to provide a QoS resource reservation method and a mobile node used in the method, which will not generate a delay in establishing a QoS reservation and can avoid the waste of QoS resources.

In order to attain the above object, according to the present invention, there is provided a QoS resource reservation method for making a QoS resource reservation on a communication path between a mobile node and a corresponding node as a communication partner of the mobile node in a communication system including the mobile node, the corresponding node, and one or more relay nodes existing on the communication path between the mobile node and the corresponding node to relay signaling exchanged between the mobile node and the corresponding node, the method comprising: a step of causing the mobile node to send, toward the corresponding node, a first message to collect information for making the QoS resource reservation; and a step in which, when the mobile node detects its handover during the QoS resource reservation processing, the mobile node sends a second message to a path from the mobile node before the handover to the corresponding node to remove the QoS resource reservation. This structure can prevent the generation of a delay in establishing a QoS reservation, and avoid the waste of QoS resources.

In the QoS resource reservation method of the present invention, as a preferred embodiment of the present invention, when the mobile node has a plurality of interfaces, the mobile node includes, in the first message, a flag to instruct the corresponding node not only to send a third message for making the QoS resource reservation to an optimum path selected by the corresponding node based on the first message but also to send, to a suboptimum path as a path most suitable next to the optimum path, a fourth message including information included in the third message and urging preparation for the QoS resource reservation to the suboptimum path. This structure can prevent a delay in establishing a QoS reservation.

In the QoS resource reservation method of the present invention, as another preferred embodiment of the present invention, when the mobile node has a plurality of interfaces, the mobile node includes, in the second message, information on a relay node to which one of the plurality of interfaces is connected at the handover destination upon transmission of the second message, and the relay node receiving the second message judges whether the relay node itself is a crossover node at which a first path from the interface before the handover to the corresponding node and a second path from the interface after the handover to the corresponding node intersect, and when the relay node judges that the relay node itself is the crossover node, processing for making the QoS resource reservation on an optimum path is performed based on a result of comparison between information for making the QoS resource reservation on the second path and information for making the QoS resource reservation on a third path from the interface, which did not perform the handover, to the corresponding node. This structure makes it possible to make a QoS resource reservation on a more optimum path.

According to the present invention, there is also provided a QoS resource reservation method for making a QoS resource reservation on a communication path between a mobile node having a plurality of interfaces and a corresponding node as a communication partner of the mobile node in a communication system including the mobile node, the corresponding node, and one or more relay nodes existing on the communication path between the mobile node and the corresponding node to relay signaling exchanged between the mobile node and the corresponding node, the method comprising a step in which, when one of the plurality of interfaces has performed a handover after a second message for making the QoS resource reservation was sent to an optimum path selected based on a first message received from the corresponding node to collect information for making the QoS resource reservation, the mobile node sends a third message to a path from the interface before the handover to the corresponding node to remove the QoS resource reservation. This structure can prevent the generation of a delay in establishing a QoS reservation, and avoid the waste of QoS resources.

In the QoS resource reservation method of the present invention, as a preferred embodiment of the present invention, when one of the plurality of interfaces has performed a handover before receiving the first message, the mobile node sends the corresponding node a message to inform the corresponding node that a handover is performed, the corresponding node sends a message to collect information for making the QoS resource reservation to a relay node as a connection destination of the interface that performs the handover based on the message to inform the corresponding node that the handover is performed, and the mobile node sends a message to make the QoS resource reservation to an optimum path selected based on the message received from the corresponding node. This structure can make a QoS resource reservation more efficiently.

In the QoS resource reservation method of the present invention, as another embodiment of the present invention, when one of the plurality of interfaces has performed a handover before receiving the first message and sending the message for making the QoS resource reservation to the optimum path selected based on the received first message, the mobile node sends a message for making the QoS resource reservation to a path other than the path from the interface before the handover to the corresponding node. This structure can make a QoS resource reservation more efficiently.

Further, according to the present invention, there is provided a QoS resource reservation method for making a QoS resource reservation on a communication path between a mobile node having a plurality of interfaces and a corresponding node as a communication partner of the mobile node in a communication system including the mobile node, the corresponding node, and one or more relay nodes existing on the communication path between the mobile node and the corresponding node to relay signaling exchanged between the mobile node and the corresponding node, the method comprising: a step of causing the mobile node to send a second message to make the QoS resource reservation and a third message to urge preparation for the QoS resource reservation to an optimum path selected based on a first message as a message received from the corresponding node to collect information for making the QoS resource reservation and a suboptimum path most suitable next to the optimum path, respectively; a step in which, when one of the plurality of interfaces has performed a handover, the mobile sends a fourth message to a path from the interface before the handover to the corresponding node to remove the QoS resource reservation; a step of causing a crossover node to send a relay node connected at the handover destination a message to collect information for making the QoS resource reservation, wherein the crossover node is a relay node at which a first path from the interface before the handover to the corresponding node and a second path from the interface after the handover to the corresponding node intersect; and a step of causing the mobile node to select either one of the suboptimum path and the second path based on the message received from the relay node connected at the handover destination and send a message for making the QoS resource reservation. This structure can prevent the generation of a delay in establishing a QoS reservation, and avoid the waste of QoS resources.

In the QoS resource reservation method of the present invention, as a preferred embodiment of the present invention, when a predetermined period has elapsed, the crossover node sends the corresponding node the fourth message including information indicating that the second path is not available, and the corresponding node sends a message to the suboptimum path to make the QoS resource reservation based on the fourth message received. This structure can make a QoS resource reservation more efficiently.

In the QoS resource reservation method of the present invention, as another preferred embodiment of the present invention, when one of the plurality of interfaces has performed a handover and the mobile node sends the fourth message before receiving the first message, the mobile node selects, after a predetermined period has elapsed, a path on which the QoS resource reservation is made, based on the message already received to collect information for making the QoS resource reservation, and sends the selected path a message to make the QoS resource reservation. This structure can make a QoS resource reservation more efficiently.

Further, according to the present invention, there is provided a mobile node performing processing for a QoS resource reservation on a communication path between the mobile node and a corresponding node as a communication partner of the mobile node, the mobile node comprising: message generation means for generating a first message to collect information for making the QoS resource reservation; sending means for sending the generated first message toward the corresponding node; and judgment means for judging whether the mobile node itself has performed a handover during the QoS resource reservation processing, wherein when the judgment means judges that the mobile node itself has performed a handover, the message generation means generates a second message to remove the QoS resource reservation, and the sending means sends the second message to a path from the mobile node before the handover thereof to the corresponding node. This structure can prevent the generation of a delay in establishing a QoS reservation, and avoid the waste of QoS resources.

In the mobile node of the present invention, as a preferred embodiment of the present invention, when the mobile node has a plurality of interfaces, the message generation means includes, in the first message, a flag to instruct the corresponding node not only to send a third message to make the QoS resource reservation to an optimum path selected by the corresponding node based on the first message, but also to send, to a suboptimum path most suitable next to the optimum path, a fourth message including information included in the third message and urging preparation for the QoS resource reservation to the suboptimum path. This structure can prevent a delay in establishing a QoS reservation.

In the mobile node of the present invention, as another preferred embodiment of the present invention, when the mobile node has a plurality of interfaces, the message generation means includes, in the second message, information on a relay node to which one of the plurality of interfaces is connected at the handover destination upon transmission of the second message to relay signaling exchanged between the mobile node and the corresponding node. This structure makes it possible to make a QoS resource reservation on a more optimum path.

Further, according to the present invention, there is provided a mobile node having a plurality of interfaces and performing processing for a QoS resource reservation on a communication path between the mobile node and a corresponding node as a communication partner of the mobile node, the mobile node comprising: message generation means for generating a second message (TFQ) for requesting transmission of a first message (Query) to collect information for making the QoS resource reservation; sending means for sending the generated second message toward the corresponding node; and receiving means for receiving the first message, wherein when one of the plurality of interfaces has performed a handover after sending a third message for making the QoS resource reservation to an optimum path selected based on the first message, the sending means sends a fourth message generated by the message generation means to a path from the interface before the handover to the corresponding node to remove the QoS resource reservation. This structure can prevent the generation of a delay in establishing a QoS reservation, and avoid the waste of QoS resources.

In the mobile node of the present invention, as a preferred embodiment of the present invention, when one of the plurality of interfaces has performed a handover before receiving the first message, the sending means sends the corresponding node a message to notify the corresponding node that the handover is performed, the receiving means receives a message to collect information for making the QoS resource reservation and sent by the corresponding node to a relay node as a node at a connection destination of the interface that performs the handover to relay signaling exchanged between the mobile node and the corresponding node, the message generation means generates a message to make the QoS resource reservation on an optimum path selected based on the message received, and the sending means sends the generated message. This structure can make a QoS resource reservation more efficiently.

In the mobile node of the present invention, as another preferred embodiment of the present invention, when one of the plurality of interfaces has performed a handover before the receiving means receives the first message and the sending means sends the message for making the QoS resource reservation to the optimum path selected based on the received first message, the message generation means generates a message to make the QoS resource reservation on a path other than the path from the interface before the handover to the corresponding node, and the sending means sends the generated the message. This structure can make a QoS resource reservation more efficiently.

Further, according to the present invention, there is provided a mobile node having a plurality of interfaces and performing processing for a QoS resource reservation on a communication path between the mobile node and a corresponding node as a communication partner of the mobile node, the mobile node comprising: message generation means for generating a second message (TFQ) for requesting transmission of a first message (Query) to collect information for making the QoS resource reservation; sending means for sending the generated second message toward the corresponding node; and receiving means for receiving the first message, wherein the message generation means generates a third message to make the QoS resource reservation on an optimum path selected based on the first message and a suboptimum path as a path most suitable next to the optimum path, respectively, and a fourth message to urge preparation for the QoS resource reservation, and when one of the plurality of interfaces has performed a handover after the sending means sent the third message and the fourth message, the sending means sends a fifth message, generated by the message generation means to remove the QoS resource reservation, to a path from the interface before the handover to the corresponding node, and based on a message to collect information for making the QoS resource reservation and received from a relay node connected at the handover destination, the sending means selects either one of the suboptimum path and a path from the interface after the handover to the corresponding node to send a message for making the QoS resource reservation. This structure can prevent the generation of a delay in establishing a QoS reservation, and avoid the waste of QoS resources.

In the mobile node of the present invention, as a preferred embodiment of the present invention, when one of the plurality of interfaces has performed a handover and the fifth message is sent before the receiving means receives the first message, judgment means is further comprised, which when a predetermined period has elapsed, selects a path, on which the QoS resource reservation is made, based on the message already received to collect information for making the QoS resource reservation, wherein the message generation means generates a message to make the QoS resource reservation on the selected path, and the sending means sends the generated message. This structure can make a QoS resource reservation more efficiently.

The QoS resource reservation method and the mobile node used in the method according to the present invention will not generate a delay in establishing a QoS reservation and can avoid the waste of QoS resources.

### BRIEF DESCRIPTION OF THE DRAWINGS

[FIG. 1] It is a network diagram showing an example of a communication network in a first embodiment of the present invention.
[FIG. 2] It is a sequence chart showing an example of a sequence of QoS resource reservation in the first embodiment of the present invention.
[FIG. 3] It is a diagram showing an example of the format of a QUERY message in the first embodiment of the present invention.
[FIG. 4] It is a diagram showing an example of the format of a RESERVE message in the first embodiment of the present invention.
[FIG. 5] It is a diagram showing an example of the format of a PRE-TEAR message in the first embodiment of the present invention.
[FIG. 6] It is a block diagram showing an example of the structure of an MN according to the first embodiment of the present invention.
[FIG. 7] It is a block diagram showing an example of the structure of a QNE in the first embodiment of the present invention.
[FIG. 8] It is a flowchart showing an example of a PRE-TEAR processing flow in the QNE in the first embodiment of the present invention.
[FIG. 9] It is a sequence chart showing an example of a sequence of QoS resource reservation in the first embodiment of the present invention.
[FIG. 10] It is a sequence chart showing another example of the sequence of QoS resource reservation in the first embodiment of the present invention.
[FIG. 11] It is a block diagram showing an example of the structure of a CN in the first embodiment of the present invention.
[FIG. 12] It is a sequence chart showing still another example of the sequence of QoS resource reservation in the first embodiment of the present invention.
[FIG. 13] It is a network diagram showing another example of the communication network in the first embodiment of the present invention.
[FIG. 14] It is a sequence chart showing yet another example of the sequence of QoS resource reservation in the first embodiment of the present invention.
[FIG. 15] It is a block diagram showing another example of the MN according to the first embodiment of the present invention.
[FIG. 16] It is a block diagram showing another example of the CN in the first embodiment of the present invention.
[FIG. 17] It is a diagram showing an example of the format of a modified QUERY message in the first embodiment of the present invention.
[FIG. 18] It is a sequence chart showing yet another example of the sequence of QoS resource reservation in the first embodiment of the present invention.
[FIG. 19] It is a diagram showing another example of the RESERVE message in the first embodiment of the present invention.
[FIG. 20] It is a diagram showing an example of the format of a PASSIVE RESERVE message in the first embodiment of the present invention.
[FIG. 21] It is a block diagram showing another example of the structure of the QNE in the first embodiment of the present invention.
[FIG. 22] It is a sequence chart showing yet another example of the sequence of QoS resource reservation in the first embodiment of the present invention.
[FIG. 23] It is a sequence chart showing yet another example of the sequence of QoS resource reservation in the first embodiment of the present invention.
[FIG. 24] It is a network diagram showing an example of a communication network in second and fourth embodiments of the present invention.
[FIG. 25] It is a diagram showing an example of the format of a PRE-TEAR message in the second embodiment of the present invention.
[FIG. 26] It is a block diagram showing an example of the structure of an MN according to the second embodiment of the present invention.
[FIG. 27] It is a block diagram showing an example of the structure of a QNE in the second embodiment of the present invention.
[FIG. 28] It is a sequence chart showing an example of a sequence of QoS resource reservation in the second embodiment of the present invention.
[FIG. 29] It is a diagram showing an example of the format of a TFQ message in the second embodiment of the present invention.
[FIG. 30] It is a sequence chart showing another example of the sequence of QoS resource reservation in the second embodiment of the present invention.
[FIG. 31] It is a network diagram showing an example of a communication network in a third embodiment of the present invention.
[FIG. 32] It is a sequence chart showing an example of a sequence of QoS resource reservation in the third embodiment of the present invention.
[FIG. 33] It is a diagram showing an example of the format of a TFQ message in the third embodiment of the present invention.
[FIG. 34] It is a diagram showing an example of the format of OPPT in the third embodiment of the present invention.
[FIG. 35] It is a sequence chart showing an example of a sequence of QoS resource reservation in the third embodiment of the present invention.
[FIG. 36] It is a sequence chart showing another example of the sequence of QoS resource reservation in the third embodiment of the present invention.
[FIG. 37] It is a sequence chart showing an example of a sequence of QoS resource reservation in the fourth embodiment of the present invention.
[FIG. 38] It is a sequence chart showing another example of the sequence of QoS resource reservation in the fourth embodiment of the present invention.
[FIG. 39] It is a sequence chart showing still another example of the sequence of QoS resource reservation in the fourth embodiment of the present invention.

### BEST MODES FOR CARRYING OUT THE INVENTION

### <First Embodiment>

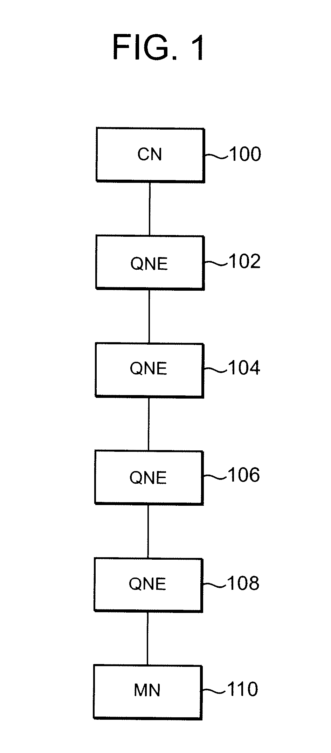

As shown in FIG. 1, MN 110 having one network interface is connected to CN 100 through a communication network via QoS NSIS Entity (QNE) 108, QNE 106, QNE 104, and QNE 102.

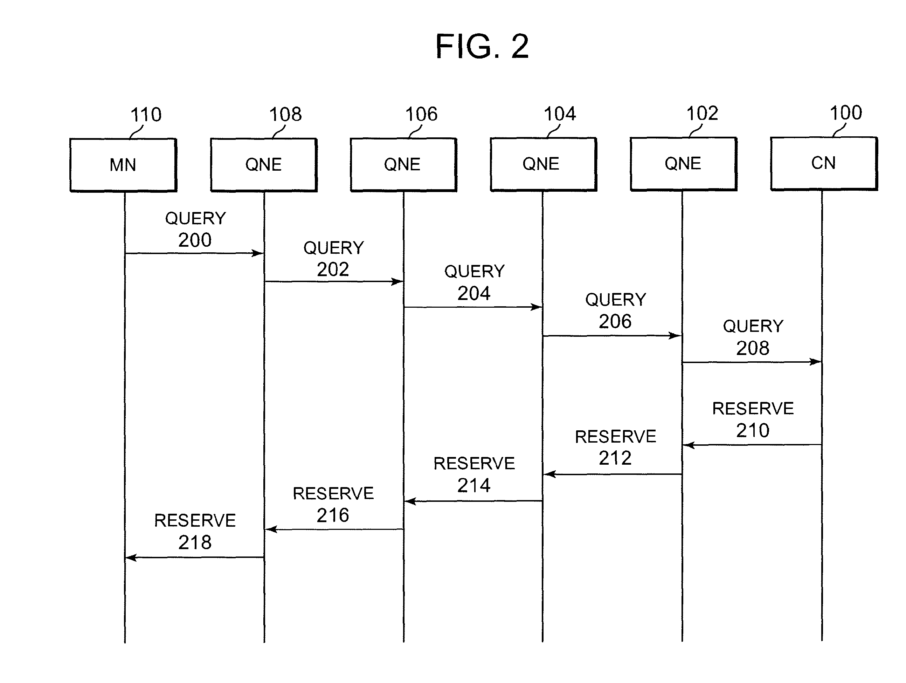

When wanting to send data to the CN 100, the MN 110 sends a QUERY message 200 (which may be simply called QUERY below) toward the CN 100 as shown in FIG. 2 to find QoS available on the path.

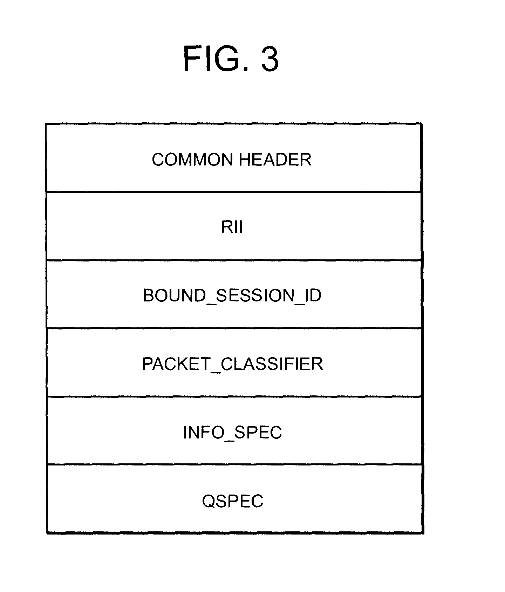

The QUERY message can take a format defined in Non-Patent Document 2 mentioned above. An example of the format of the QUERY message is shown in FIG. 3. The QUERY message collects QoS information available along the data path.

The CN 100 that has received a QUERY message 208 generates a RESERVE message (which may be simply called RESERVE below), and as shown in FIG. 2, sends the MN 110 a RESERVE message 210 generated along the same path as the passage of the QUERY message sent from the MN 110 to the CN 100.

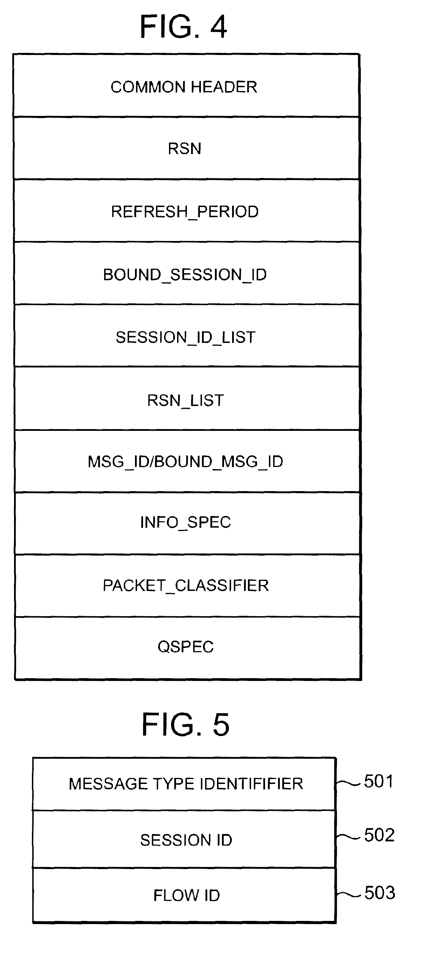

Parameters in the RESERVE message are defined in Non-Patent Document 2. The RESERVE message is to make QoS reservations at QNEs 102, 104, 106, and 108 located in the middle of the data path. An example of the format of the RESERVE message is shown in FIG. 4.

During QoS reservation processing, if the MN 110 knows that the network connection through an access point (AP) on the network is about to change, the MN 110 (or a QNE adjacent to the MN 110) will send a message to the CN 100 before the actual change/handover of AP. This message is called a PRE-TEAR message (which may be simply called PRE-TEAR below). PRE-TEAR consists of the following elements.

| | |
|---|---|
| PRE-TEAR: = | Message type identification information |
| | SESSION ID |
| | FLOW ID |

Message type identification information (MESSAGE TYPE IDENTIFIER) 501 is used to indicate PRE-TEAR. SESSION ID 502 is the same as that in the RESERVE message sent by the CN 100 (i.e., the same as that in the QUERY previously sent by the MN 110). FLOW ID 503 is the same as that in the QUERY previously sent along this path. Here, an example of the format of the PRE-TEAR message is shown in FIG. 5. PRE-TEAR has the function of removing QoS resources reserved on a path from which a handover is to be performed (i.e., a path connected just before the handover).

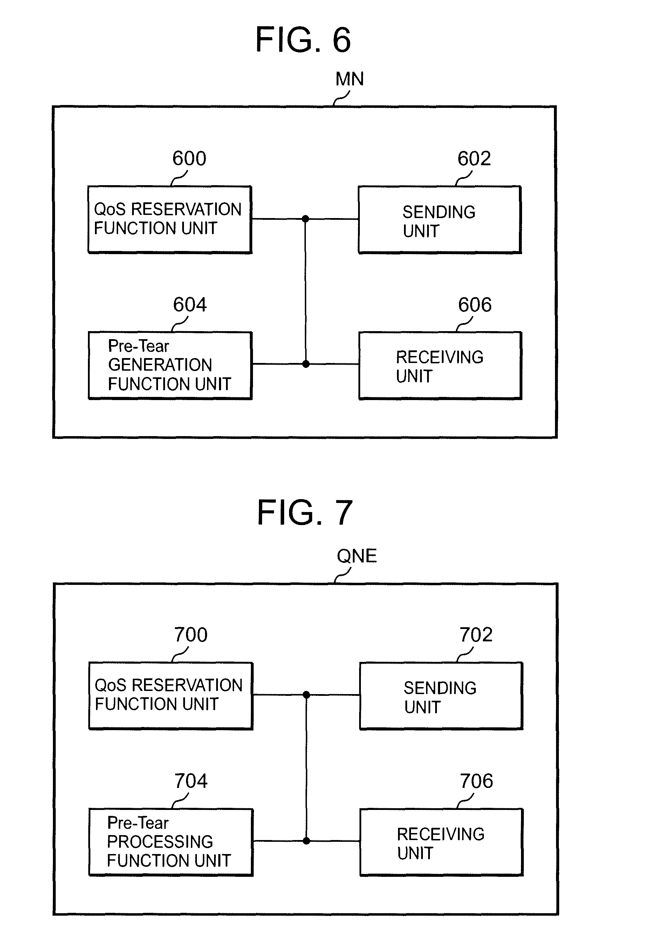

FIG. 6 shows an example of functional blocks of MN. The MN includes receiving means 606, sending unit 602, QoS reservation function unit 600, and Pre-Tear generation function unit 604. The Pre-Tear generation function unit 604 generates a PRE-TEAR message and causes the sending unit 602 to send it. FIG. 7 shows an example of functional blocks of an intermediate QNE such as QNE 102, 104, 106, or 108 located between MN and CN. The QNE includes sending unit 702, receiving unit 706, QoS reservation function unit 700, and Pre-Tear processing function unit 704.

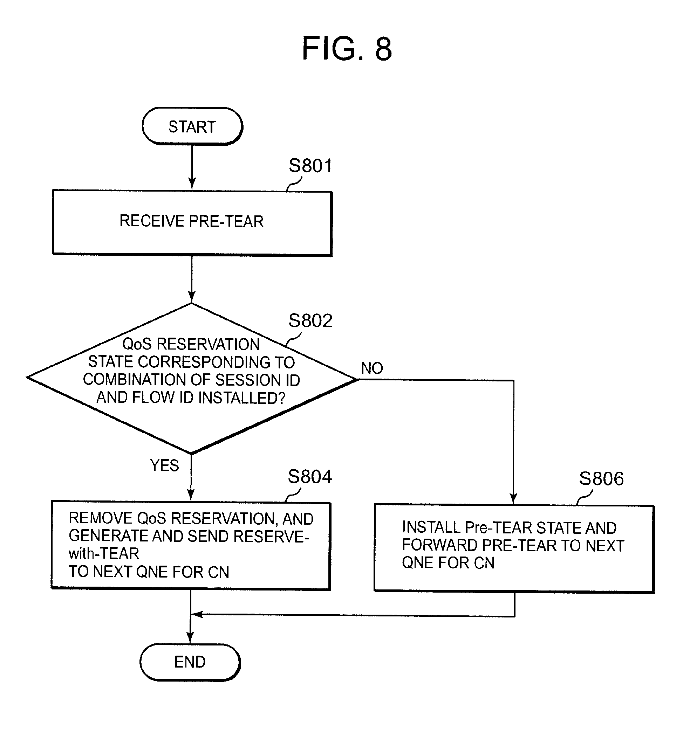

If receiving PRE-TEAR, the QNE has the Pre-Tear processing function unit 704 as shown in the functional block diagram of FIG. 7 perform Pre-Tear processing. An example of the PRE-TEAR processing is shown in FIG. 8. As shown in FIG. 8, when PRE-TEAR is received by a QNE (step S801), the QNE checks if a QoS reservation state corresponding to the combination of session ID and flow ID included in the PRE-TEAR is already installed (step S802).

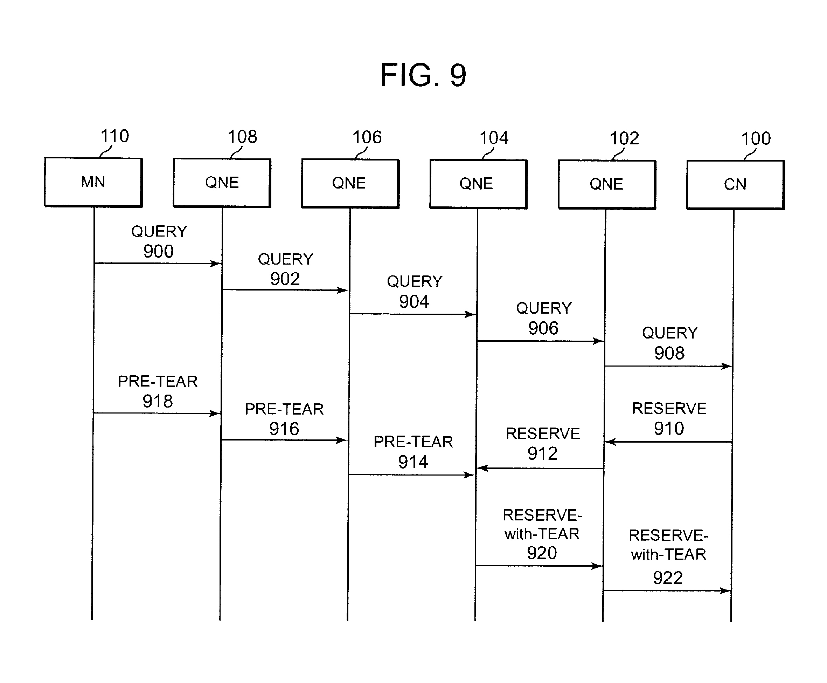

If such a QoS reservation state with the session ID and flow ID is not present, since a subsequent RESERVE message corresponding to the session ID and flow ID is discarded, a Pre-Tear state is installed and the PRE-TEAR is forwarded to the next QNE for the CN 100 (step S806). On the other hand, if such a QoS reservation state with the session ID and flow ID is present in the QNE, the QoS reservation is removed, and as shown in FIG. 9, the QNE sends a message to remove the QoS reservation with the session ID and flow ID on the QNE on a data path from the QNE itself toward the CN 100 (step S804).

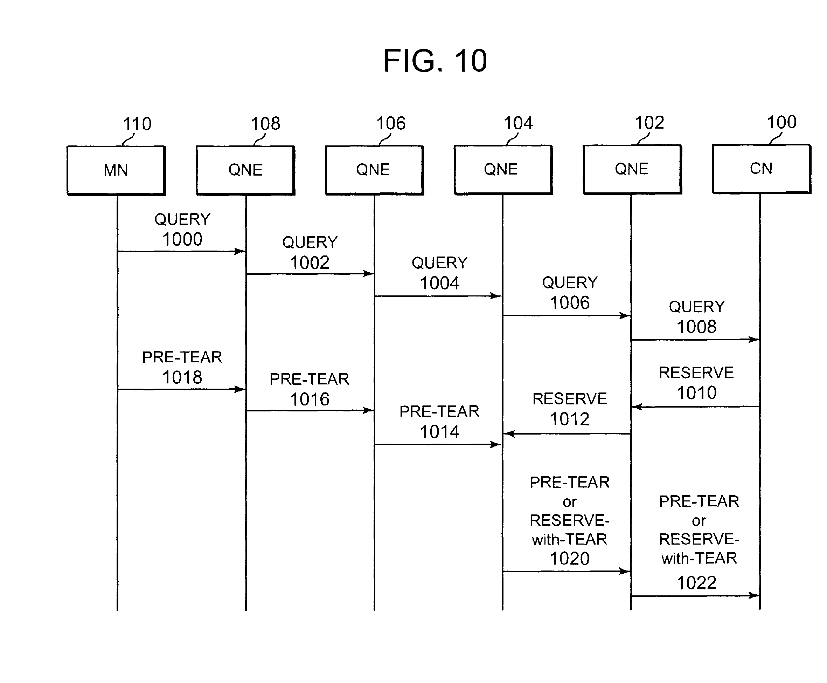

This message is a RESERVE-with-TEAR message 920 (see Non-Patent Document 1) generated by this QNE toward the CN 100, and is forwarded along all paths toward the CN 100. After removing the existing QoS reservation state in step S804, the QNE may forward received PRE-TEAR 1014 to the next QNE for the CN 100 as shown in FIG. 10. When PRE-TEAR 1020 is received by the next QNE on the data path toward the CN 100, the same processing as mentioned above is performed.

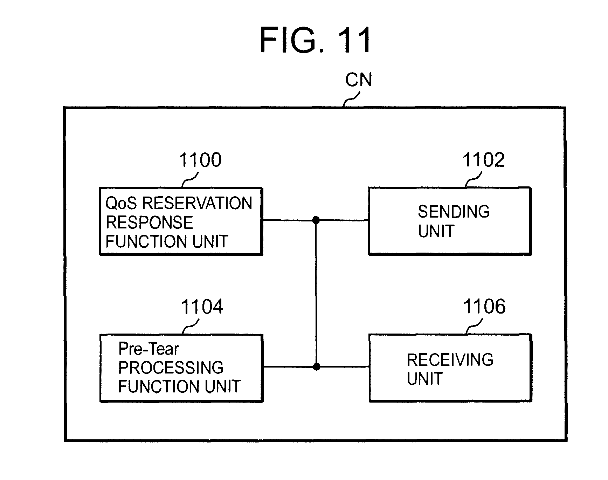

FIG. 11 shows an example of functional blocks of the CN. The CN is configured to include sending unit 1102, receiving unit 1106, QoS reservation response function unit 1100, and Pre-Tear processing function unit 1104. When the CN 100 receives a RESERVE-with-TEAR message, the QoS reservation response function unit 1100 removes a QoS state, and if necessary, sends a RESPONSE message (see Non-Patent Document 1). When the CN 100 receives a PRE-TEAR message, the Pre-Tear processing function unit 1104 triggers the removal of the QoS status, and installs the pre-tear state to prevent any reservation in the CN 100 from now on by a RESERVE message corresponding to a pair of SID and FID.

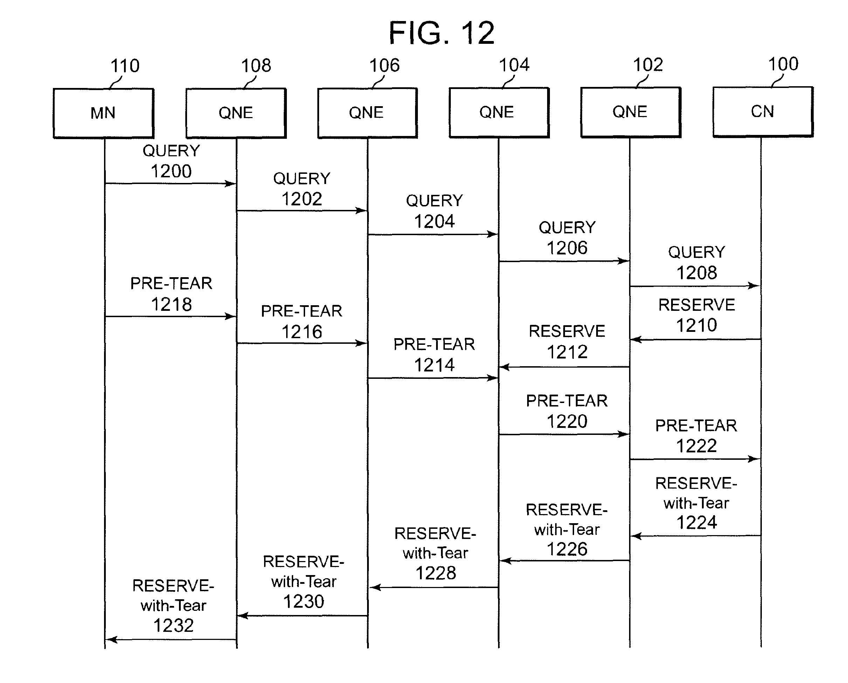

In step S804, the QNE can also forward PRE-TEAR toward the CN 100 instead of removing the QoS reservation installed. In this case, the QNE inserts, into the PRE-TEAR, additional instruction information indicating that the state is not removed. When the CN 100 receives a PRE-TEAR message and detects such instruction information, the Pre-Tear processing function unit 1104 of the CN 100 sends, toward the MN 110, another message (RESERVE-with-TEAR 1224) to remove a corresponding QoS reservation state as shown in FIG. 12.

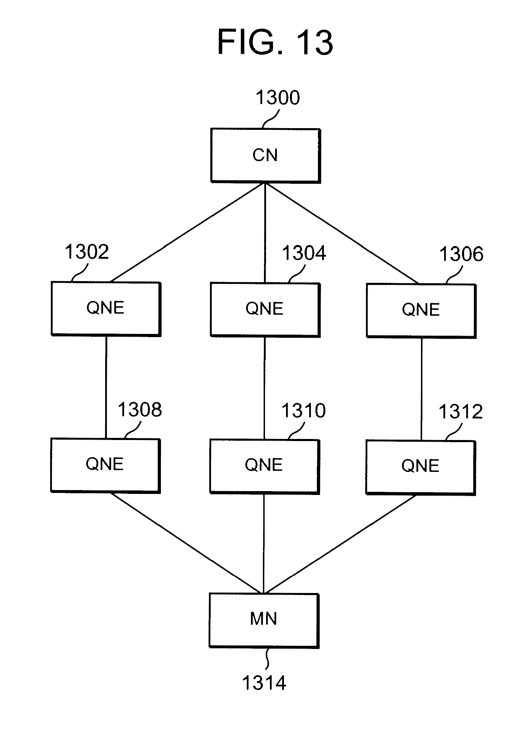

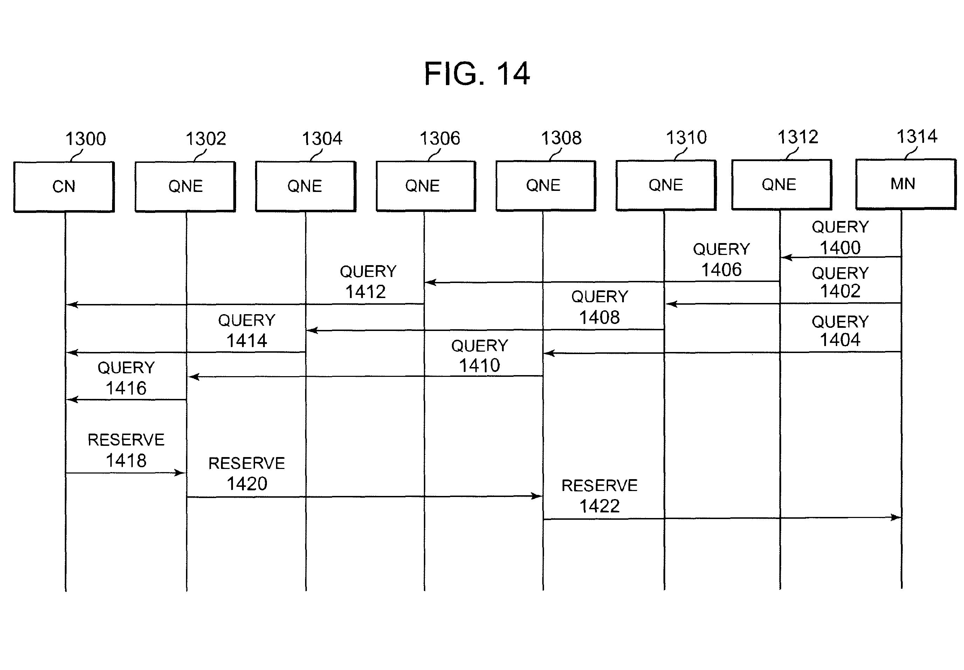

FIG. 13 shows another network configuration. In this case, MN 1314 has multiple connections to CN 1300. As shown in FIG. 14, the MN 1314 sends multiple QUERY messages 1400, 1402, and 1404 toward the CN 1300. Each QUERY flows from the MN 1314 to the CN 1300 to collect QoS information on each path.

The CN 1300 or each CRN (CRossover Node) on various paths selects the optimum path based on the criteria specified by the MN 1314 in the QUERY, and sends RESERVE 1418 or an aggregated (collected) QUERY result to the path. At this time, the CN 1300 receives QUERY 1400, 1402, and 1404, and selects the optimum path (e.g., a path from the CN 1300 to the MN 1314 via QNEs 1302 and 1308). Upon selection, for example, the QUERY messages 1400, 1402, and 1404 received by the CN 1300 are stored, and the optimum path is determined before all the QUERY messages are delivered or time T elapses.

When an interface of the MN 1314 on a path to which the CN 1300 sends RESERVE performs a handover, the MN 1314 needs to perform QUERY processing (processing for sending QUERY from all interfaces of the MN 1314) again. This is because the MN 1314 cannot receive RESERVE or the QUERY result. Even if the other connections to the CN 1300 remain unchanged in the MN 1314, since the QUERY result is lost, the MN 1314 cannot immediately begin any QoS reservation. Such an interruption can be avoided as follows.

Namely, when an interface on the optimum path side has performed a handover, the MN 1314 instructs the CN 1300 to select a backup path so that traffic can be directed to the second optimum path, and send the result of QUERY processing to the path. In other words, the MN 1314 sets a BICAST flag in the QUERY. If traffic needs to be directed to the second optimum path, the MN 1314 also instructs the CN 1300 to establish a PASSIVE reservation on the second optimum path so that the MN 1314 can immediately make a QoS reservation. The MN 1314 sets a PASSIVE reservation flag in the QUERY.

As an improvement, the BICAST flag and the PASSIVE reservation flag in the QUERY can be replaced with one flag (a flag in which the BICAST flag and the PASSIVE reservation flag are combined). The one flag (the flag in which the BICAST flag and the PASSIVE reservation flag are combined) is to inform the CN 1300 that the QUERY processing result will be sent along the second optimum path on which the PASSIVE reservation is established.

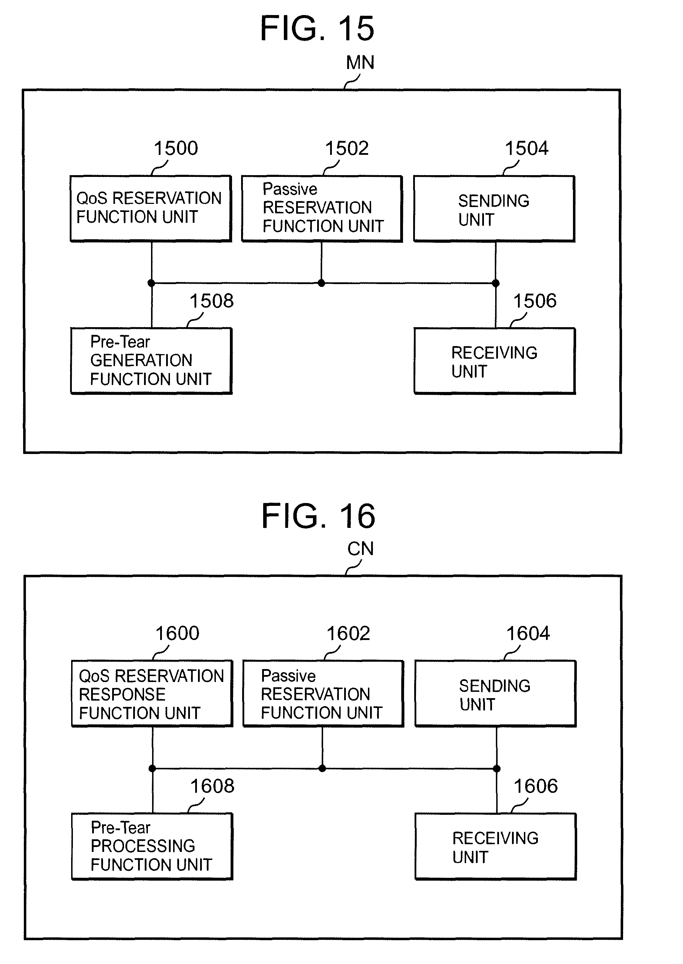

An example of an MN structure for supporting the above-mentioned processing is shown in FIG. 15. Compared to the MN structure shown in FIG. 6, passive reservation function unit 1502 for setting the above-mentioned flag in the QUERY is added. Further, an example of a CN structure for supporting the above-mentioned processing is shown in FIG. 16. Compared to the CN structure shown in FIG. 11, passive reservation function unit 1602 for processing QUERY in which the above-mentioned flag is set is added.

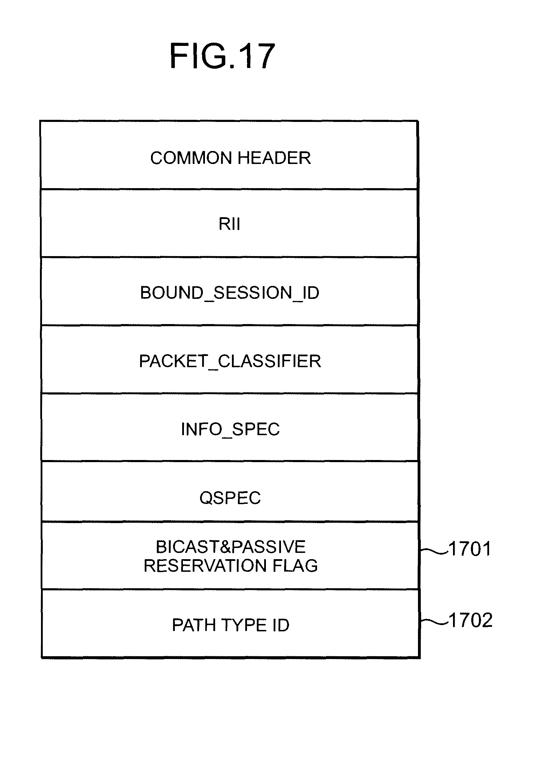

An example of the format of a modified QUERY message in the above-mentioned processing is shown in FIG. 17. The modified QUERY message includes BICAST&PASSIVE RESERVATION FLAG 1701. In addition, PATH TYPE ID 1702 (see Patent Document 1) may be included in a scenario to be needed.

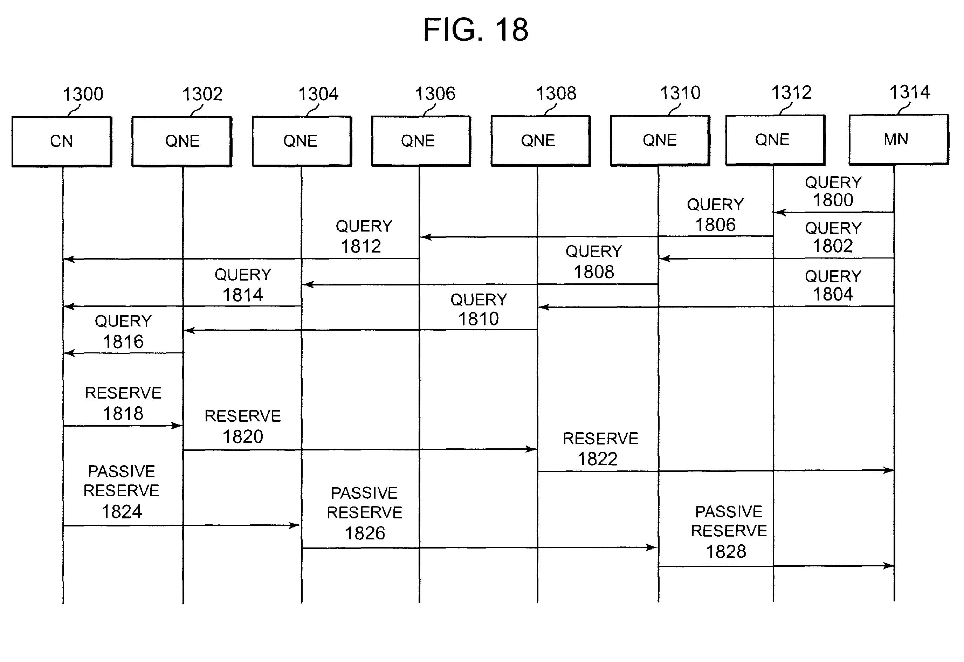

When the modified QUERY reaches the CN 1300, the CN 1300 ranks paths, through which respective QUERY messages have passed, based on QoS (information collected by QUERY) available on respective paths or other criteria expressed by the MN 1314. When two flags (BICAST flag and PASSIVE reservation flag) exist in QUERY, the CN 1300 selects two paths having the highest QoS described in the corresponding QUERY or two paths based on the criteria expressed by the MN 1314. As shown in FIG. 18, the CN 1300 sends RESERVE 1818 to one path having the highest QoS availability and PASSIVE RESERVE 1824 to the other path having the second optimum QoS.

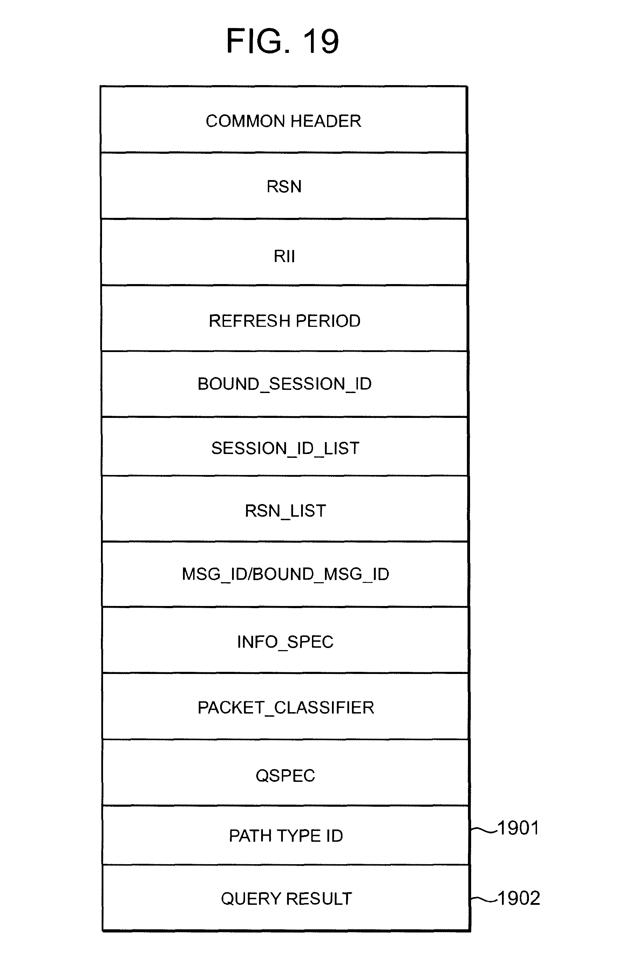

An example of the format of a RESERVE message here is shown in FIG. 19. The RESERVE message is configured to add PATH TYPE ID 1901 (see Patent Document 1) and QUERY RESULT 1902 in addition to fields described in Non-Patent Document 1. The PATH TYPE ID 1901 is an option. The QUERY RESULT 1902 includes information on the optimum path and the second optimum path.

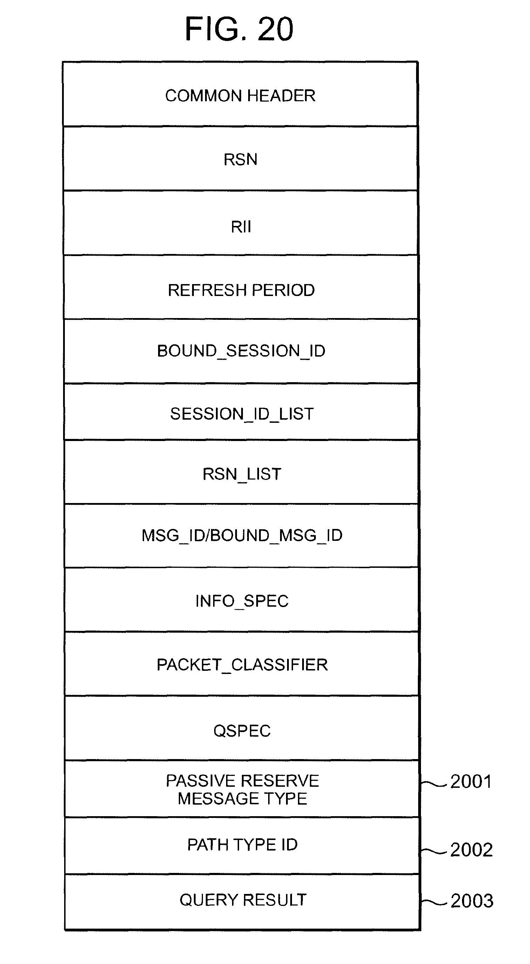

An example of the format of a PASSIVE RESERVE message here is shown in FIG. 20. The PASSIVE RESERVE message is configured to add PASSIVE RESERVE MESSAGE TYPE 2001, PATH TYPE ID 2002 (see Patent Document 1), and QUERY RESULT 2003 in addition to fields described in Non-Patent Document 1.

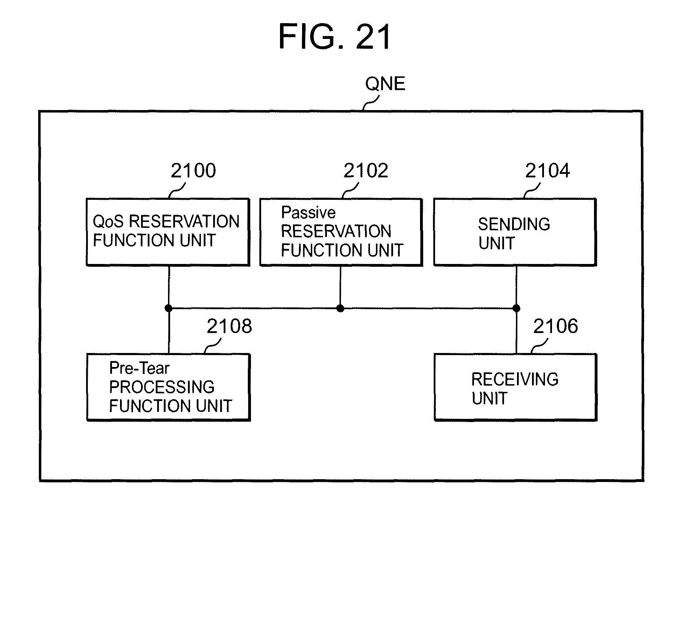

An example of a QNE structure for supporting the above-mentioned processing is shown in FIG. 21. Compared to the QNE shown in FIG. 7, passive reservation function unit 2102 is added. For example, when the QNE receives PASSIVE RESERVE from the CN to the MN, the passive reservation function unit 2102 only establishes a GIST (General Internet Signaling Transport) state or a QoS NSLP state of "zero reservation" (reservation with a QoS parameter of zero) along the GIST state.

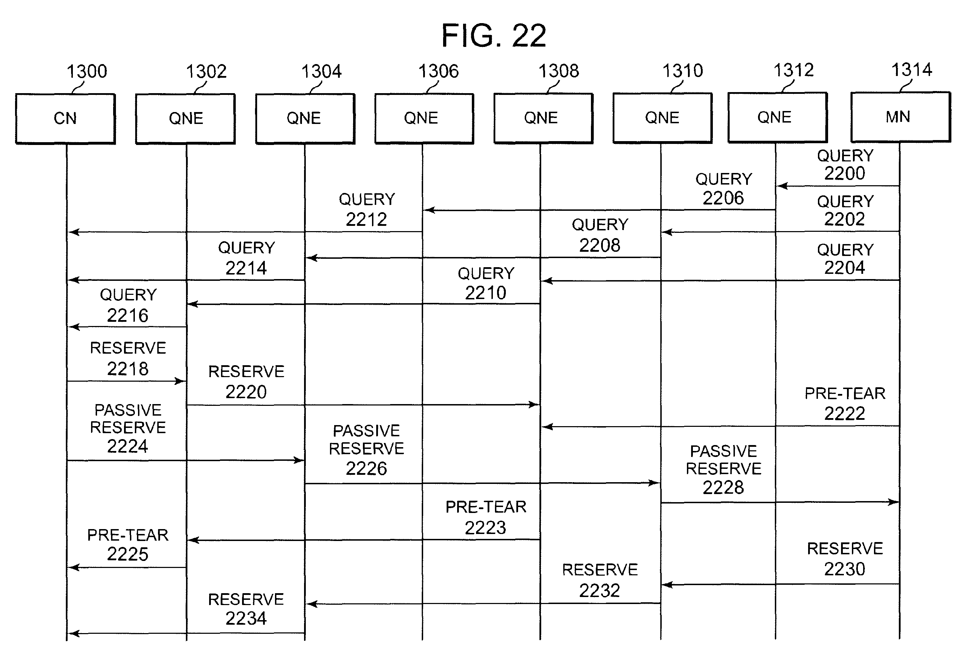

When one of the interfaces of the MN 1314 performs a handover during the progress of QUERY processing, the MN 1314 sends PRE-TEAR 2222 to remove QoS reservation established so far on the path (i.e., the path from the interface performing a handover to the CN) or to block, in advance, any reservation that is about to be made. The details of signaling are shown in FIG. 22.

Here, the CN 1300 has already sent PASSIVE RESERVE to the second optimum path (QNEs 1304 and 1310 in the embodiment). Then, when the interface for the selected optimum path (QNEs 1302 and 1308 in the embodiment) performs a handover, the MN 1314 receives the result of QUERY processing in PASSIVE RESERVE 2228. The MN 1314 sends RESERVE 2230 to make a perfect reservation on the second optimum path through which it has received the PASSIVE RESERVE 2228.

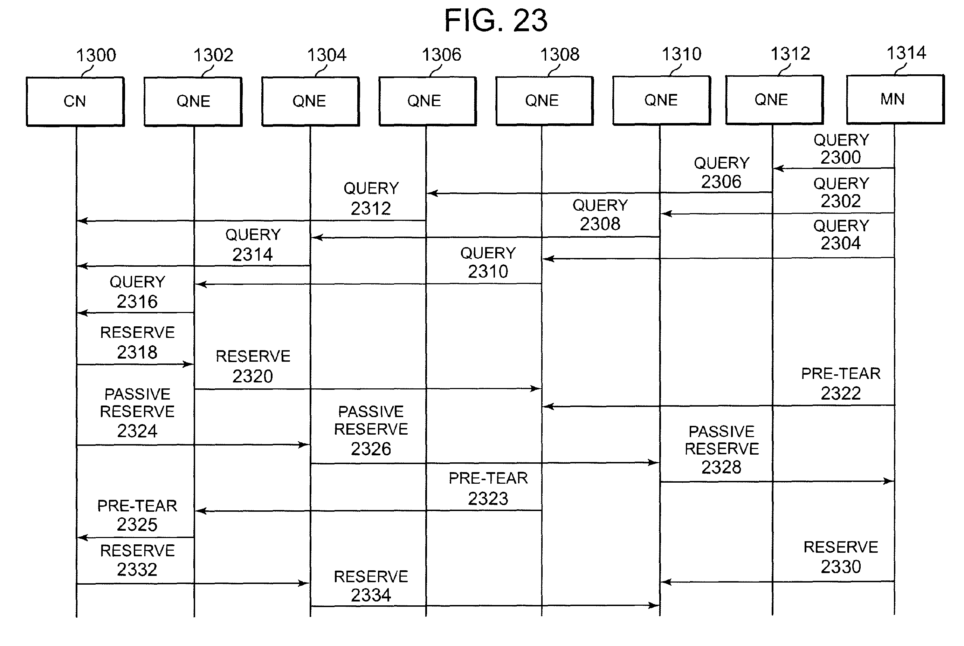

Suppose that RESERVE messages for the same reservation can be sent from both ends (e.g., the sender side and the receiver side). In this case, as shown in FIG. 23, when receiving PRE-TEAR 2325, the CN/CRN generates RESERVE 2332 and sends the RESERVE 2332 to the second optimum path along which a PASSIVE RESERVE message has already been sent. Thus, since RESERVE 2334 from the CN/CRN encounters RESERVE 2330 from the MN 1314 on the way (on the second optimum path), QoS reservations on the second optimum path can be promoted.

The installed Pre-Tear state may be removed explicitly after the corresponding RESERVE or PASSIVE RESERVE is blocked, or removed after a predetermined period has elapsed.

### <Second Embodiment>

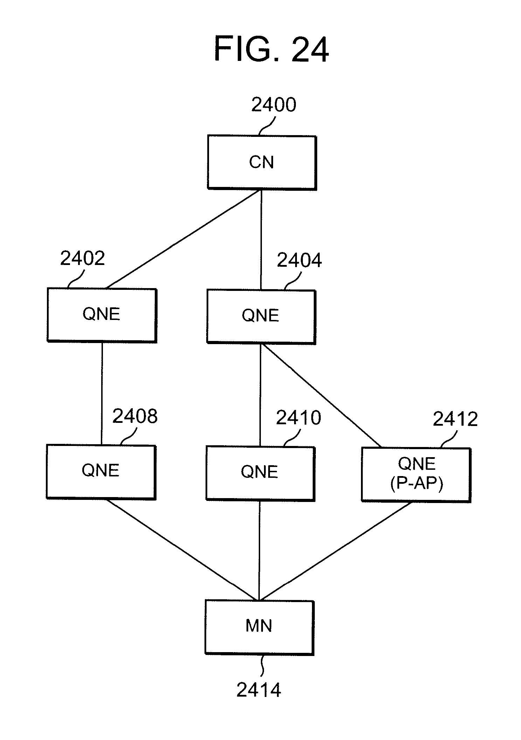

As another scenario, as shown in FIG. 24, if one interface of an MN 2414 performs a handover during the progress of QUERY processing on condition that the data direction is from the MN 2414 to a CN 2400, the MN 2414 may switch the path to the second optimum path. However, the path through the interface that has performed the handover has better QoS and a higher possibility of connecting to the CN 2400 than the other path from the MN 2414 to the CN 2400 through the other interface (interface that has not performed the handover) remaining in the MN 2414.

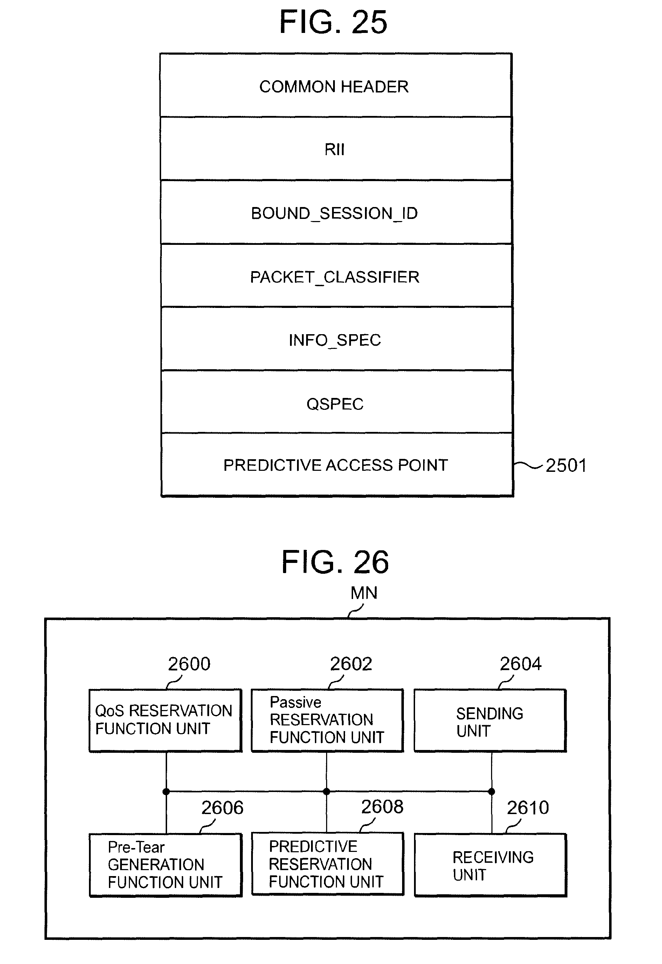

To check such a possibility (for example, that the path to which the connection was handed over (i.e., the path after the handover) has better QoS than the second optimum path selected in the QUERY processing), the MN 2414 gets to know, in some way, the location/address of a predictive access point (P-AP) 2412 as a handover destination access point. PRE-TEAR sent from the MN 2414 carries information (PREDICTIVE ACCESS POINT) 2501 on the P-AP 2412. An example of the format of a PRE-TEAR message here is shown in FIG. 25.

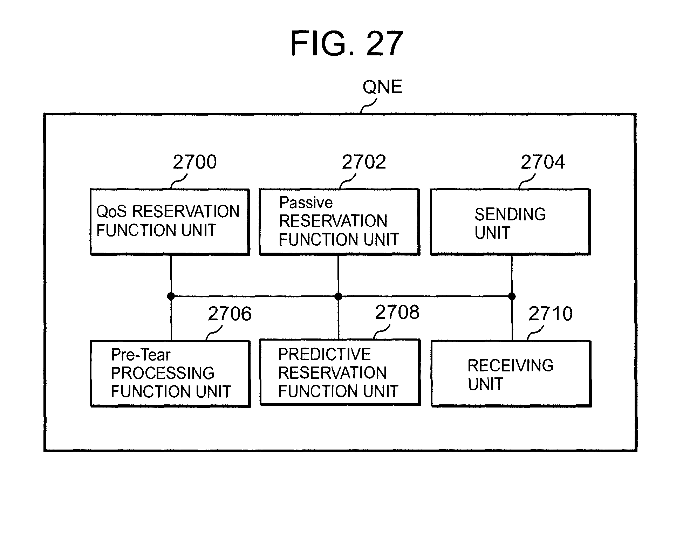

FIG. 26 shows an example of an MN structure for supporting the above-mentioned processing. This MN includes predictive reservation function unit 2608. The predictive reservation function unit 2608 can obtain information on the P-AP to generate new PRE-TEAR. FIG. 27 shows an example of a QNE structure for supporting the above-mentioned processing. This QNE includes predictive reservation function unit 2708. The predictive reservation function unit 2708 can process the PRE-TEAR including the information on the P-AP.

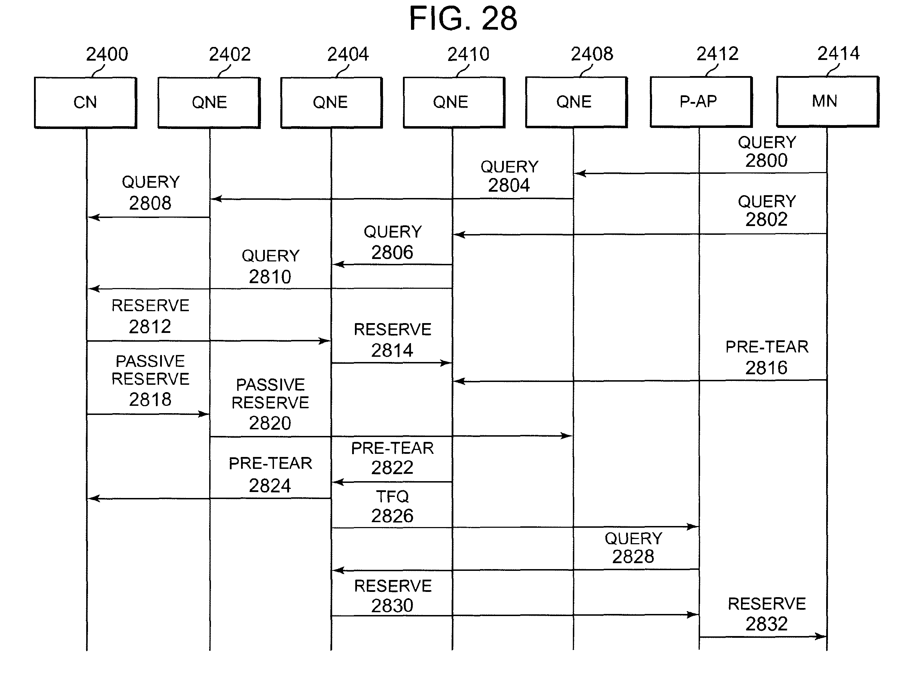

The information on the P-AP in the PRE-TEAR is useful to find a CRN (QNE) 2404 on the path. For example, each QNE checks a routing state regarding the P-AP to determine whether the QNE itself is the CRN. The CRN 2404 may be a predetermined node. For example, in a 3G environment, it may be a gateway which manages both the original location and the P-AP. An example of signaling processing is shown in detail in FIG. 28.

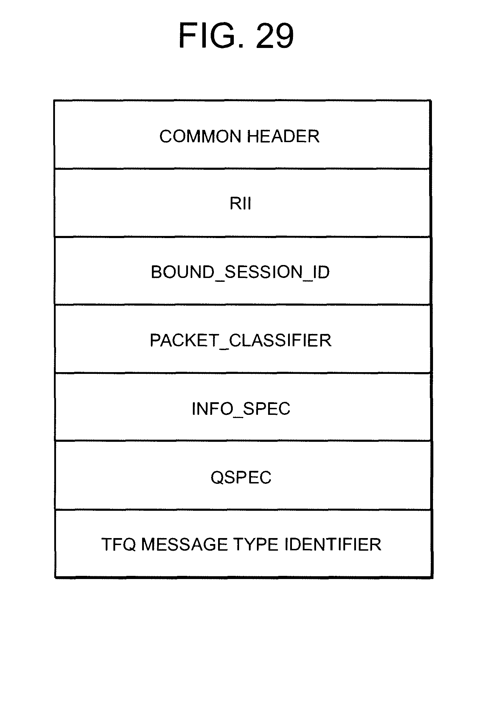

As shown in FIG. 28, when the CRN (QNE) 2404 receives PRE-TEAR 2822, the CRN 2404 sends Trigger for QUERY (TFQ) 2826 to the P-AP 2412. An example of a format used for TFQ is shown in FIG. 29. The P-AP 2412 that has received the TFQ 2826 sends QUERY 2828 toward the CN 2400.

The QUERY 2828 is intercepted by the CRN 2404 at which the path that was supposed to be optimum without the handover and the path at the handover destination (predictive path) intersect. The CRN 2404 compares QoSs available on the predictive path from the CRN 2404 to the P-AP 2412 and the second optimum path. When there are more QoSs available on the predictive path than QoSs available on the second optimum path, the CRN (CRN on the predictive path) 2404 sends RESERVE 2830 to the predictive path and discards the QUERY 2828.

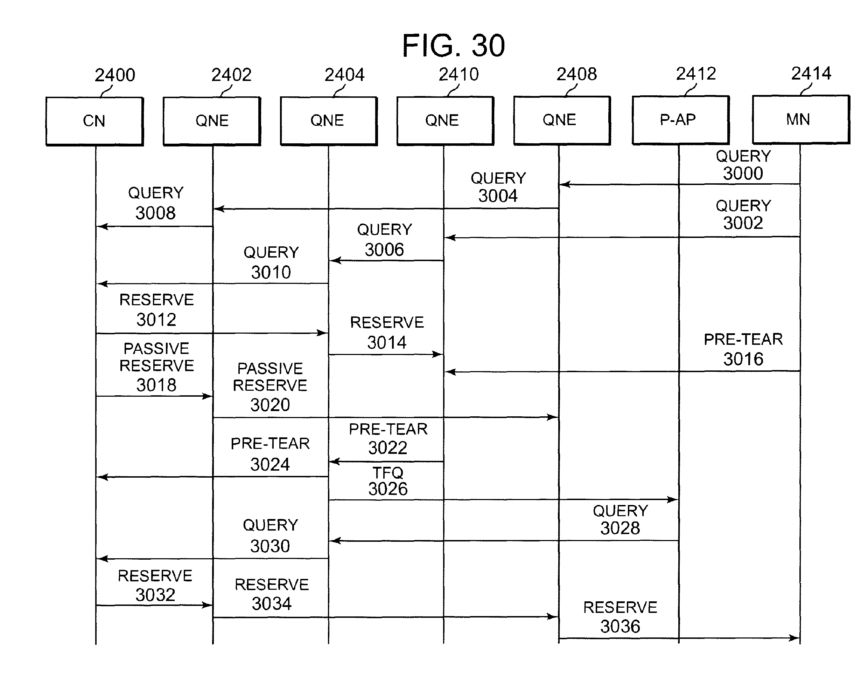

On the other hand, when there are less QoSs available on the predictive path than QoSs available on the second optimum path, the CRN 2404 passes QUERY to a CRN between the optimum path (path that was supposed to be optimum without handover) and the second optimum path. In the example of FIG. 24, such a CRN does not exist as shown in FIG. 30. Therefore, the CN 2400 receives QUERY 3030 from the P-AP 2412, compares it with QoSs available on the second optimum path, and sends RESERVE 3032 to the second optimum path.

### <Third Embodiment>

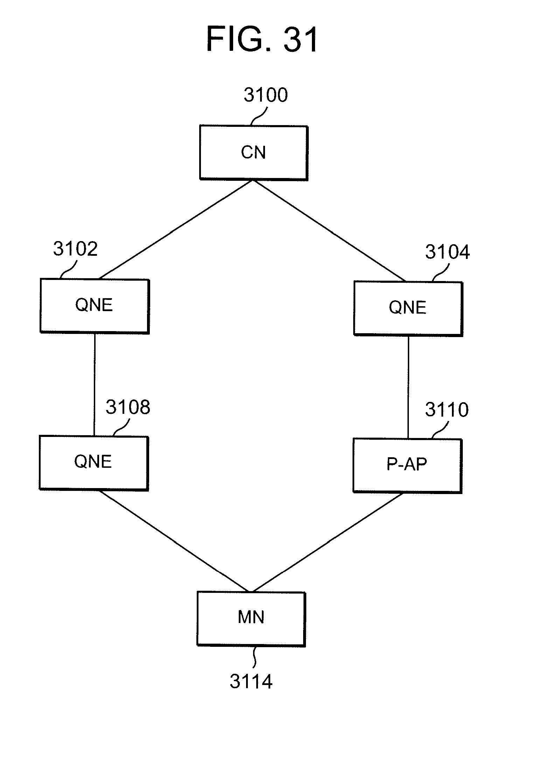

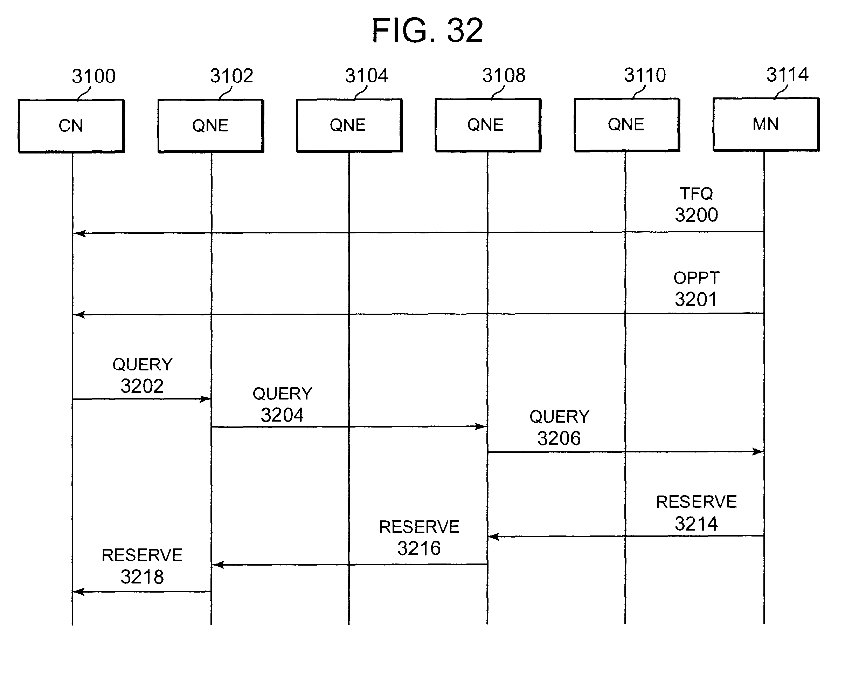

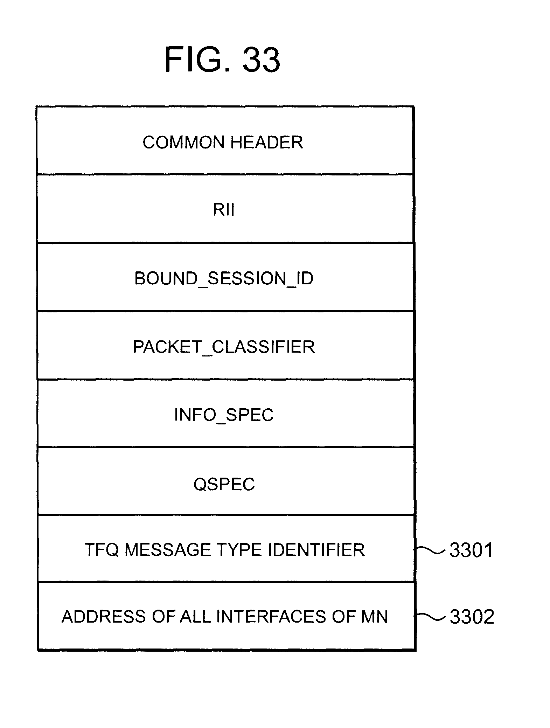

FIG. 31 shows a scenario in a case where the data direction is from a CN 3100 to an MN 3114. An example of signaling processing in this scenario is shown in FIG. 32. As shown in FIG. 32, the MN 3114 sends TRIGGER for QUERY (TFQ) 3200 toward the CN 3100. An example of the format of TFQ is shown in FIG. 33. The TFQ 3200 is configured to include two additional fields for MESSAGE TYPE ID (TFQ MESSAGE TYPE IDENTIFIER) 3301 and ADDRESSES OF ALL INTERFACES OF MN 3302 contained in the MN 3114 in addition to information included in normal QUERY.

The CN 3100 that receives the TFQ 3200 sends QUERY to each path/interface listed in the TFQ 3200.

When the MN 3114 detects that one of the interfaces of MN 3114 is about to perform a handover and the MN 3114 has not received any QUERY on the interface yet, the MN 3114 sends OFF PATH PRE-TEAR (OPPT) 3201 to the CN 3100. The OPPT 3201 is to report that one of the paths listed in the TFQ 3200 is about to be handed over.

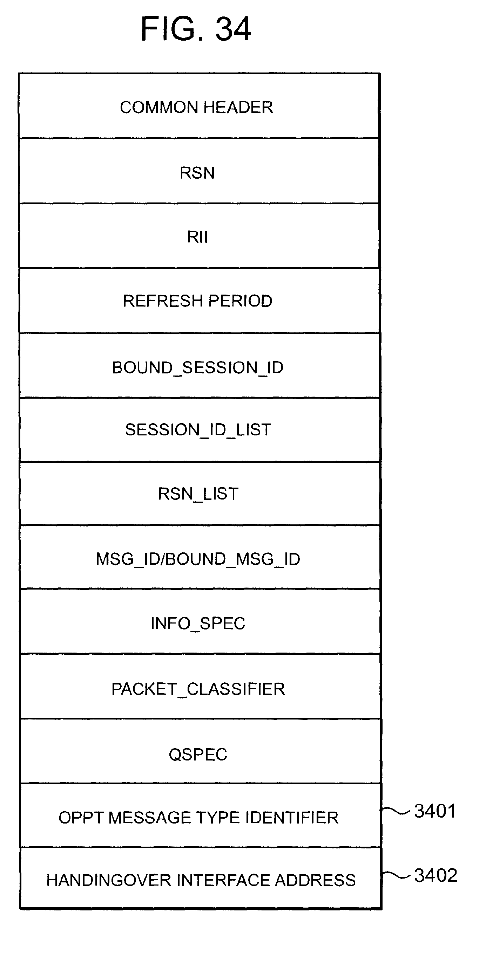

The IP address of the interface (the interface that is about to perform the handover) is indicated in a "HANDINGOVER INTERFACE ADDRESS" field of the OPPT 3201. The OPPT 3201 may be directly sent to the CN 3100. An example of the format of OPPT is shown in FIG. 34. The OPPT includes information on RESERVE with TEAR (see Non-Patent Document 1), and further includes MESSAGE TYPE ID (OPPT MESSAGE TYPE IDENTIFIER) 3401 and HANDINGOVER INTERFACE ADDRESS) 3402.

When the CN 3100 receives OPPT 3201 before sending QUERY toward the MN 3114, the CN 3100 prohibits the transmission of QUERY to a path predicted to be handed over as indicated in the field of HANDINGOVER INTERFACE ADDRESS 3402 of the OPPT 3201. The MN 3114 receiving all QUERY messages selects the optimum path, and sends RESERVE 3214 onto the optimum path.

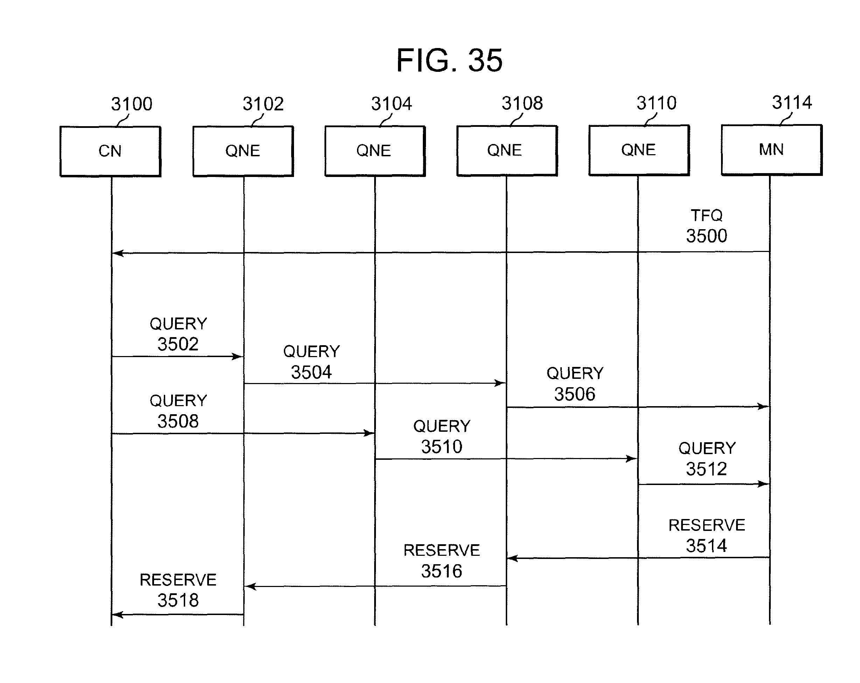

After receiving all QUERY messages 3506 and 3512 as shown in FIG. 35, if the MN 3114 gets to know the occurrence of a handover before sending RESERVE, the MN 3114 will avoid the path that is about to perform the handover (even if it is the optimum path) and send RESERVE 3514 onto the optimum path (an interface for available QoSs listed in corresponding QUERY).

For example, when the optimum path is CN 3100-QNE 3104-QNE 3110-MN 3114 and an interface connected to the path is about to perform the handover, the MN 3114 selects the second optimum path, e.g., CN 3100-QNE 3102-QNE 3108-MN 3114, without selecting the path. Then, the MN 3114 sends RESERVE 3514 onto the second optimum path (the second optimum path among all the paths connecting the CN to the MN and compared based on the QUERY processing).

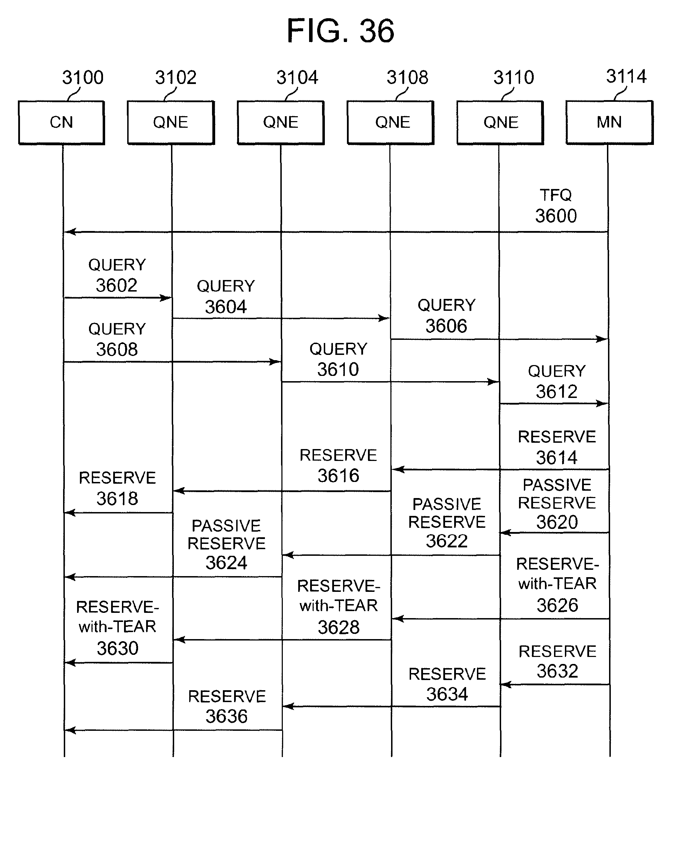

Finally, as shown in FIG. 36, the MN 3114 recognizes that a handover is about to be performed after sending RESERVE 3614 to the interface (the optimum path based on QUERY), the MN 3114 sends RESERVE with TEAR 3626 to the selected path. Then, the MN 3114 sends RESERVE 3632 to the second optimum path through which PASSIVE RESERVE 3620 previously sent passes.

### <Fourth Embodiment>

Refer to FIG. 24 for the scenario when the data direction is from CN to MN. When one of the interfaces of the MN 2414 performs a handover during the progress of QUERY processing, the MN 2414 may switch over to the second optimum path. However, the interface that has performed the handover may connect to the CN 2400 through a path having better QoS than the other path from the CN 2400 to the MN 2414 through the other interface (interface that has not performed the handover) remaining in the MN 2414.

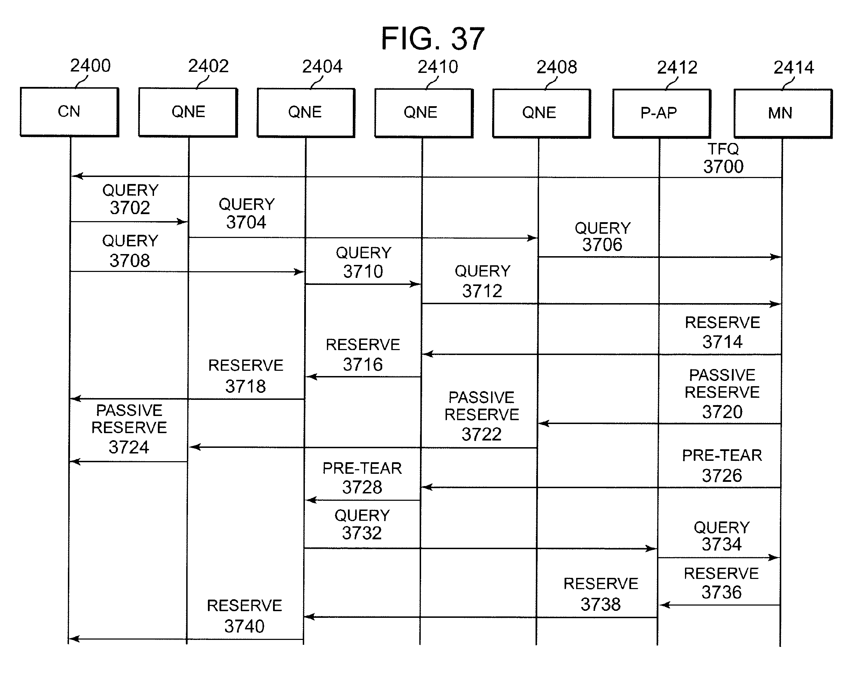

FIG. 37 shows an example of signaling processing that applies the present invention to such a scenario. As shown in FIG. 37, the MN 2414 embeds the location of a predictive access point (P-AP) in PRE-TEAR 3726. Then, in order to check available QoSs, the CN 2400 or the CRN 2404 sends QUERY 3732 to a predictive handover path.

There are two scenarios when PRE-TEAR has been sent. As shown in FIG. 37, the first scenario is such that, when PRE-TEAR 3726 has been sent after the MN 2414 sent RESERVE 3714, the CRN (QNE2404 in this case) sends QUERY 3732 to the P-AP 2412. When the MN 2414 connects to the P-AP 2412, the P-AP 2412 forwards QUERY information to the MN 2414. The MN 2414 can determine and select the optimum path (either of the second optimum path and the predictive path). For example, as shown in FIG. 37, the MN 2414 selects the predictive path and sends RESERVE 3736 onto the predictive path.

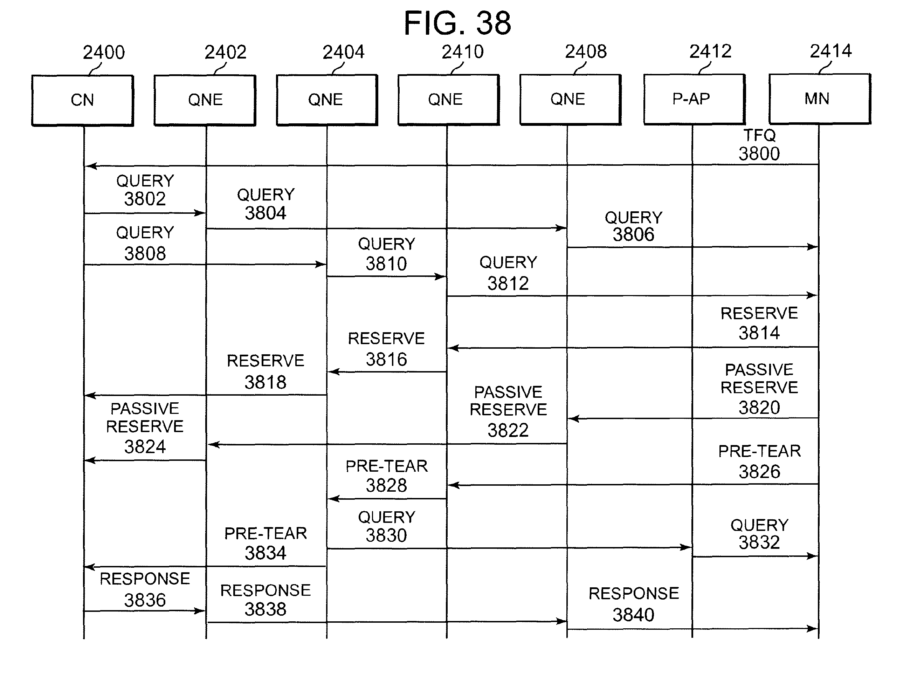

In addition, as shown in FIG. 38, the CRN 2404 can send the CN 2400 PRE-TEAR 3834 to notify the CN 2400 to send a message onto the second optimum path in order to change a PASSIVE reservation into a reservation. For example, this can be RESPONSE 3836 to PASSIVE RESERVE or RESERVE. In this case, if the MN 2414 sends new RESERVE to the predictive path, the MN 2124 can be switched back to the predictive path.

Alternatively, the CRN 2404 can wait for a short time period after sending QUERY to the predictive path and before sending PRE-TEAR. When the MN capable of connecting to the P-AP and sends RESERVE quickly (immediately), it can avoid switching over to the second optimum path.

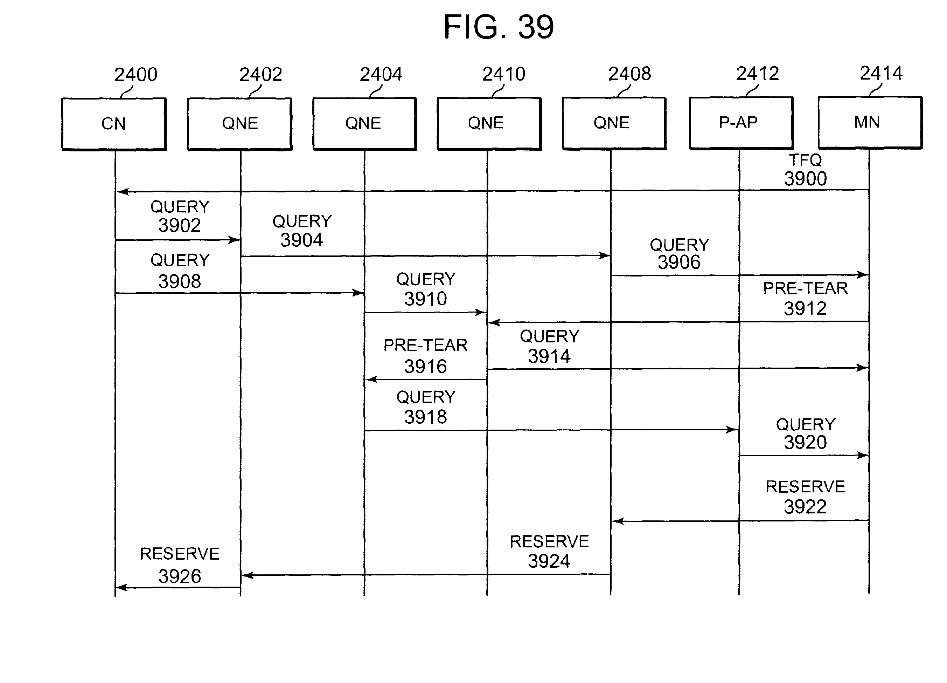

As shown in FIG. 39, the second scenario is such that the MN 2414 sends PRE-TEAR 3912 before receiving QUERY 3906 and QUERY 3914. In this scenario, the CRN 2404 between the PRE-TEAR receiving path and the predictive path sends QUERY 3918 toward the predictive AP 2412. After sending the PRE-TEAR, the MN 2414 can also set a long time for receiving QUERY to select a path.

Further, the QNE2410 that has received the PRE-TEAR 3912 may optionally forward QUERY 3914 toward the MN 2414. This is because the PRE-TEAR 3912 is only sent based on prediction from the MN 2414 (i.e., it is not always accurate).

Each functional block used in the explanations of each embodiment of the present embodiment, described above, can be realized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI. The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used. Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

Since the QoS resource reservation method and the mobile node used in the method according to the present invention will not generate any delay in establishing a QoS reservation and can avoid the waste of QoS resources, they are useful for a QoS resource reservation method for making a QoS resource reservation on a communication path between a mobile node and a corresponding node as a communication partner, and the mobile node used in the method.

## Claims

1. A QoS resource reservation method for making a QoS resource reservation on a communication path between a mobile node and a corresponding node as a communication partner of the mobile node in a communication system including the mobile node, the corresponding node, and one or more relay nodes existing on the communication path between the mobile node and the corresponding node to relay signaling exchanged between the mobile node and the corresponding node, the method comprising:
a step of causing the mobile node to send, toward the corresponding node, a first message to collect information for making the QoS resource reservation; and
a step in which, when the mobile node detects its handover during the QoS resource reservation processing, the mobile node sends a second message to a path from the mobile node before the handover to the corresponding node to remove the QoS resource reservation.

2. The QoS resource reservation method according to claim 1, wherein when the mobile node has a plurality of interfaces,
the mobile node includes, in the first message, a flag to instruct the corresponding node not only to send a third message for making the QoS resource reservation to an optimum path selected by the corresponding node based on the first message, but also to send, to a suboptimum path as a path most suitable next to the optimum path, a fourth message including information included in the third message and urging preparation for the QoS resource reservation to the suboptimum path.

3. The QoS resource reservation method according to claim 1, wherein when the mobile node has a plurality of interfaces,
the mobile node includes, in the second message, information on a relay node to which one of the plurality of interfaces is connected at the handover destination upon transmission of the second message, and
the relay node receiving the second message judges whether the relay node itself is a crossover node at which a first path from the interface before the handover to the corresponding node and a second path from the interface after the handover to the corresponding node intersect, and when the relay node judges that the relay node itself is the crossover node, processing for making the QoS resource reservation on an optimum path is performed based on a result of comparison between information for making the QoS resource reservation on the second path and information for making the QoS resource reservation on a third path from the interface, which did not perform the handover, to the corresponding node.

4. A QoS resource reservation method for making a QoS resource reservation on a communication path between a mobile node having a plurality of interfaces and a corresponding node as a communication partner of the mobile node in a communication system including the mobile node, the corresponding node, and one or more relay nodes existing on the communication path between the mobile node and the corresponding node to relay signaling exchanged between the mobile node and the corresponding node, the method comprising
a step in which, when one of the plurality of interfaces has performed a handover after a second message for making the QoS resource reservation was sent to an optimum path selected based on a first message received from the corresponding node to collect information for making the QoS resource reservation, the mobile node sends a third message to a path from the interface before the handover to the corresponding node to remove the QoS resource reservation.

5. The QoS resource reservation method according to claim 4, wherein
when one of the plurality of interfaces has performed a handover before receiving the first message, the mobile node sends the corresponding node a message to inform the corresponding node that a handover is performed,
the corresponding node sends a message to collect information for making the QoS resource reservation to a relay node as a connection destination of the interface that performs the handover based on the message to inform the corresponding node that the handover is performed, and
the mobile node sends a message to make the QoS resource reservation to an optimum path selected based on the message received from the corresponding node.

6. The QoS resource reservation method according to claim 4, wherein when one of the plurality of interfaces has performed a handover before receiving the first message and sending the message for making the QoS resource reservation to the optimum path selected based on the received first message, the mobile node sends a message for making the QoS resource reservation to a path other than the path from the interface before the handover to the corresponding node.

7. A QoS resource reservation method for making a QoS resource reservation on a communication path between a mobile node having a plurality of interfaces and a corresponding node as a communication partner of the mobile node in a communication system including the mobile node, the corresponding node, and one or more relay nodes existing on the communication path between the mobile node and the corresponding node to relay signaling exchanged between the mobile node and the corresponding node, the method comprising:
a step of causing the mobile node to send a second message to make the QoS resource reservation and a third message to urge preparation for the QoS resource reservation to an optimum path selected based on a first message as a message received from the corresponding node to collect information for making the QoS resource reservation and a suboptimum path most suitable next to the optimum path, respectively;
a step in which, when one of the plurality of interfaces has performed a handover, the mobile sends a fourth message to a path from the interface before the handover to the corresponding node to remove the QoS resource reservation;
a step of causing a crossover node to send a relay node connected at the handover destination a message to collect information for making the QoS resource reservation, wherein the crossover node is a relay node at which a first path from the interface before the handover to the corresponding node and a second path from the interface after the handover to the corresponding node intersect; and
a step of causing the mobile node to select either one of the suboptimum path and the second path based on the message received from the relay node connected at the handover destination and send a message for making the QoS resource reservation.

8. The QoS resource reservation method according to claim 7, wherein
when a predetermined period has elapsed, the crossover node sends the corresponding node the fourth message including information indicating that the second path is not available, and
the corresponding node sends a message to the suboptimum path to make the QoS resource reservation based on the fourth message received.

9. The QoS resource reservation method according to claim 7, wherein
when one of the plurality of interfaces has performed a handover and the mobile node sends the fourth message before receiving the first message,
the mobile node selects, after a predetermined period has elapsed, a path on which the QoS resource reservation is made, based on the message already received to collect information for making the QoS resource reservation, and sends the selected path a message to make the QoS resource reservation.

10. A mobile node performing processing for a QoS resource reservation on a communication path between the mobile node and a corresponding node as a communication partner of the mobile node, the mobile node comprising:
message generation means for generating a first message to collect information for making the QoS resource reservation;
sending means for sending the generated first message toward the corresponding node; and
judgment means for judging whether the mobile node itself has performed a handover during the QoS resource reservation processing,
wherein when the judgment means judges that the mobile node itself has performed a handover, the message generation means generates a second message to remove the QoS resource reservation, and
the sending means sends the second message to a path from the mobile node before the handover thereof to the corresponding node.

11. The mobile node according to claim 10, wherein when the mobile node has a plurality of interfaces,
the message generation means includes, in the first message, a flag to instruct the corresponding node not only to send a third message to make the QoS resource reservation to an optimum path selected by the corresponding node based on the first message, but also to send, to a suboptimum path most suitable next to the optimum path, a fourth message including information included in the third message and urging preparation for the QoS resource reservation to the suboptimum path.

12. The mobile node according to claim 10, wherein when the mobile node has a plurality of interfaces,
the message generation means includes, in the second message, information on a relay node to which one of the plurality of interfaces is connected at the handover destination upon transmission of the second message to relay signaling exchanged between the mobile node and the corresponding node.

13. A mobile node having a plurality of interfaces and performing processing for a QoS resource reservation on a communication path between the mobile node and a corresponding node as a communication partner of the mobile node, the mobile node comprising:
message generation means for generating a second message (TFQ) for requesting transmission of a first message (Query) to collect information for making the QoS resource reservation;
sending means for sending the generated second message toward the corresponding node; and
receiving means for receiving the first message,
wherein when one of the plurality of interfaces has performed a handover after sending a third message for making the QoS resource reservation to an optimum path selected based on the first message, the sending means sends a fourth message generated by the message generation means to a path from the interface before the handover to the corresponding node to remove the QoS resource reservation.

14. The mobile node according to claim 13, wherein
when one of the plurality of interfaces has performed a handover before receiving the first message, the sending means sends the corresponding node a message to notify the corresponding node that the handover is performed,
the receiving means receives a message to collect information for making the QoS resource reservation and sent by the corresponding node to a relay node as a node at a connection destination of the interface that performs the handover to relay signaling exchanged between the mobile node and the corresponding node,
the message generation means generates a message to make the QoS resource reservation on an optimum path selected based on the message received, and
the sending means sends the generated message.

15. The mobile node according to claim 13, wherein
when one of the plurality of interfaces has performed a handover before the receiving means receives the first message and the sending means sends the message for making the QoS resource reservation to the optimum path selected based on the received first message,
the message generation means generates a message to make the QoS resource reservation on a path other than the path from the interface before the handover to the corresponding node, and
the sending means sends the generated the message.

16. A mobile node having a plurality of interfaces and performing processing for a QoS resource reservation on a communication path between the mobile node and a corresponding node as a communication partner of the mobile node, the mobile node comprising:
message generation means for generating a second message (TFQ) for requesting transmission of a first message (Query) to collect information for making the QoS resource reservation;
sending means for sending the generated second message toward the corresponding node; and
receiving means for receiving the first message,
wherein the message generation means generates a third message to make the QoS resource reservation on an optimum path selected based on the first message and a suboptimum path as a path most suitable next to the optimum path, respectively, and a fourth message to urge preparation for the QoS resource reservation, and
when one of the plurality of interfaces has performed a handover after the sending means sent the third message and the fourth message, the sending means sends a fifth message, generated by the message generation means to remove the QoS resource reservation, to a path from the interface before the handover to the corresponding node, and based on a message to collect information for making the QoS resource reservation and received from a relay node connected at the handover destination, the sending means selects either one of the suboptimum path and a path from the interface after the handover to the corresponding node to send a message for making the QoS resource reservation.

17. The mobile node according to claim 16, wherein when one of the plurality of interfaces has performed a handover and the fifth message is sent before the receiving means receives the first message,
the mobile node further comprises judgment means which, when a predetermined period has elapsed, selects a path, on which the QoS resource reservation is made, based on the message already received to collect information for making the QoS resource reservation, wherein
the message generation means generates a message to make the QoS resource reservation on the selected path, and
the sending means sends the generated message.
